# EUROPÄISCHE PATENTSCHRIFT

(11) **EP 1 809 466 B1**
(45) Veröffentlichungstag und Bekanntmachung des Hinweises auf die Patenterteilung: **10.09.2014**
(21) Anmeldenummer: 05857845.1
(22) Anmeldetag: 08.11.2005
(51) Int. Cl.: B29C 47/00, B29C 47/02, B29C 47/06, B29C 47/56, B29C 47/08

(54) **ANLAGE ZUM HERSTELLEN VON MEHRSCHICHT-VERBUNDROHREN**
SYSTEM FOR PRODUCING MULTILAYER COMPOSITE TUBES
INSTALLATION POUR PRODUIRE DES TUBES DE RACCORDEMENT A COUCHES MULTIPLES

(30) Priorität: 10.11.2004 DE 102004054194
(43) Veröffentlichungstag der Anmeldung: 25.07.2007
(73) Patentinhaber: WRW Westfälische Rohrwerke GmbH, 59227 Ahlen (DE)
(72) Erfinder: PILARSKI, Edmund, 59229 Ahlen (DE)
(74) Vertreter: Meinke, Jochen
(86) Internationale Anmeldenummer: PCT/EP2005/011895
(87) Internationale Veröffentlichungsnummer: WO 2006/050892

(56) Entgegenhaltungen:
- EP-A- 0 353 977
- EP-A- 1 147 003
- DE-A1- 2 923 544
- DE-C1- 19 646 859
- PATENT ABSTRACTS OF JAPAN Bd. 1996, Nr. 08, 30. August 1996 (1996-08-30) & JP 08 090627 A (SEKISUI CHEM CO LTD), 9. April 1996 (1996-04-09)

## Beschreibung

Die Erfindung betrifft eine Anlage zum Herstellen von Mehrschicht-Verbundrohren mit einer Umformeinrichtung zum Umformen eines Metallbandes in einen rohrförmigen Körper, mit einer Schweißstation mit Schweißeinrichtung zum Verschweißen der benachbarten Längsränder des rohrförmigen Körpers sowie mit einer Extrusionseinrichtung, welche einen an die Umformeinrichtung angrenzenden, in Produktionsrichtung gesehen vor der Schweißeinrichtung angeordneten ersten Extruder zum Anbringen einer Kunststoff-Innenschicht an den rohrförmigen Körper, dem ein dritter Extruder zum Aufbringen eines Innenschicht-Haftvermittlers zugeordnet ist, und einen hinter der Schweißeinrichtung angeordneten zweiten Extruder zum Aufbringen einer Kunststoff-Außenschicht an den rohrförmigen Körper aufweist, dem ein vierter Extruder zum Aufbringen eines Außenschicht-Haftvermittlers zugeordnet ist, entsprechend dem Oberbegriff des Anspruchs 1.

Eine solche Anlage ist aus EP 1 147 003 B1 bekannt. Diese Anlage weist einen einzigen Extrusionskopf auf, der ortsfest vorgesehen ist, wobei der erste und der zweite Extruder in einer Linie miteinander fluchtend einander zugewandt seitlich neben dem Extrusionskopf zur Produktionslinie parallel angeordnet sind und sich der Extrusionskopf in der Produktionslinie zwischen dem ersten und dem zweiten Extruder befindet. Ferner sind ein dritter und ein vierter Extruder für Haftvermittler an zugehörigen ortsfesten Säuleneinrichtungen kardanisch angebracht, wobei der dritte Extruder dem ersten Extruder und der vierte Extruder dem zweiten Extruder zugeordnet ist.

Eine Anlage mit einem solchen Aufbau hat mehrere Nachteile. So hat die Anbringung der Extruder in einer miteinander fluchtenden Linie zur Folge, dass das Kunststoffmaterial viele Umlenkungen und lange Fließwege zurücklegen muss. Dadurch kann das Material z.B. durch Scherung geschädigt werden. Der einzige ortsfest angebrachte Extrusionskopf hat den Nachteil, dass der Abstand zwischen dem Materialaustritt für das Innenrohr und dem Außenrohr fest vorgegeben und somit nicht optimal an die Nennweiten unterschiedlicher Rohrtypen angepasst werden kann.

Aufgabe der Erfindung ist es deshalb, eine Anlage der eingangs bezeichneten Art zu schaffen, die mit möglichst großer Produktionsgeschwindigkeit eine optimale Verbundrohr-Qualität ermöglicht, wobei auch ein Verbundrohr-Nennweiten-Wechsel einfach und zeitsparend möglich sein soll.

Diese Aufgabe wird bei einer Anlage der eingangs bezeichneten Art erfindungsgemäß dadurch gelöst, dass die Extrusionseinrichtung einen vor der Schweißeinrichtung angeordneten ersten Extrusionskopf, der mit dem ersten Extruder und dem dritten Extruder verbunden ist, und einen hinter der Schweißeinrichtung angeordneten zweiten Extrusionskopf aufweist, der mit dem zweiten Extruder und dem vierten Extruder verbunden ist, wobei der erste Extrusionskopf parallel zur Produktionsrichtung verstellbar ist und der zweite Extrusionskopf ortsfest angeordnet ist oder der erste Extrusionskopf und der zweite Extrusionskopf parallel zur Produktionsrichtung und relativ zueinander verstellbar ausgebildet sind, gemäß dem Kennzeichnenden Teil des Anspruchs 1.

Der wesentliche Vorteil der erfindungsgemäßen Anlage liegt somit darin, dass durch das Vorsehen zweier Extrusionsköpfe und ihrer Verstellmöglichkeit relativ zueinander der Abstand zwischen den beiden Extrusionsköpfen flexibel verstellbar ist, so dass die Extrusionsköpfe optimal auf die jeweils herzustellenden Rohrdimensionen abgestimmt werden können.

In besonders vorteilhafter Ausgestaltung ist vorgesehen, dass der erste und der dritte Extruder und/oder der zweite und der vierte Extruder in ihrer Höhe und ihrer Längsrichtung verstellbar ausgebildet sind. Dies ermöglicht es, neben der Verstellbarkeit der Extrusionsköpfe zueinander jeweils eine optimale Anpassung an die jeweils herzustellende Rohrdimension zu erreichen.

Die Handhabung bzw. Einrichtung der Anlage wird dabei wesentlich dadurch vereinfacht, dass beide Extrusionsköpfe auf der ortsfesten Schweißstation angeordnet sind. Somit befinden sich beide Extrusionsköpfe zentral auf der Schweißstation und können bei der jeweiligen Einrichtung der Anlage auf einen bestimmten Rohrtyp definiert zueinander eingestellt werden.

Dabei ist in weiterer vorteilhafter Ausgestaltung vorgesehen, dass die Schweißeinrichtung gegenüber der Schweißstation in allen drei Raumrichtungen verstellbar ist, so dass die Schweißeinrichtung gemeinsam mit den beiden Extrusionsköpfen jeweils definiert zueinander eingestellt werden kann.

In besonders bevorzugter weiterer Ausgestaltung ist vorgesehen, dass der verstellbare erste Extrusionskopf an einer gegenüber der Schweißstation in Produktionsrichtung verfahrbaren Plattform angeordnet ist, an welcher zusätzlich ein Schließrollenpaket angeordnet ist. Dieses Schließrollenpaket der Umformeinrichtung ist dabei bevorzugt gegenüber der Plattform in allen drei Raumrichtungen verstellbar ausgebildet, um eine optimale Anpassung an den jeweils herzustellenden Rohrtyp zu ermöglichen.

Bevorzugt ist weiterhin vorgesehen, dass zwischen beiden Extrusionsköpfen ein Freiraum zur Aufnahme von Prozessüberwachungseinrichtungen und der seitlich neben den beiden Extrusionsköpfen angeordneten Schweißeinrichtung vorgesehen ist. Durch die Veränderung des Abstandes zwischen den beiden Extrusionsköpfen auf der Schweißstation läßt sich die Größe dieses Freiraumes variieren, so dass je nach Bedarf problemlos jederzeit zusätzliche Produktionsüberwachungsmittel vorgesehen werden können.

Ferner ist vorteilhaft vorgesehen, dass die auf einer beweglichen Plattform angeordneten Extruder synchron mit der den ersten Extrusionskopf tragenden Plattform verschiebbar sind.

Die Erfindung ist nachstehend anhand der Zeichnung beispielhaft näher erläutert. Diese zeigt in
- Fig. 1: eine Draufsicht auf eine erfindungsgemäße Anlage,
- Fig. 2: eine Seitenansicht der Anlage,
- Fig. 3: eine Seitenansicht der Schweißstation der Anlage in Produktionsrichtung gesehen,
- Fig. 4: eine Vorderansicht der Schweißstation quer zur Produktionsrichtung und in
- Fig. 5: eine Draufsicht auf Fig. 4.

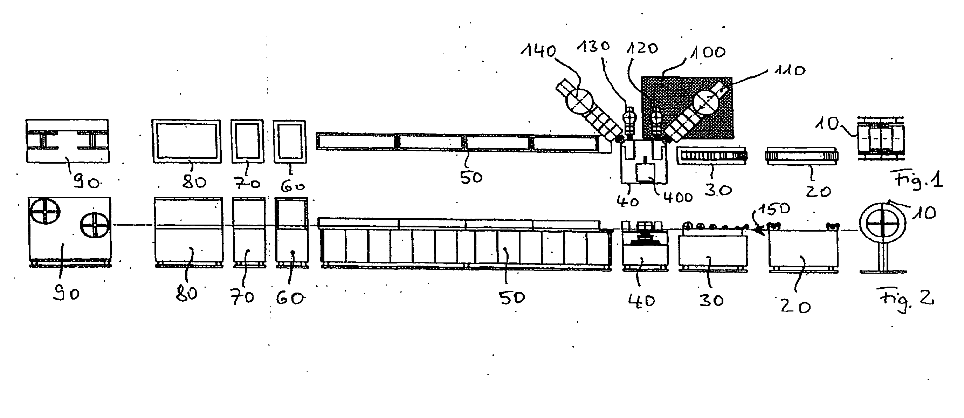

Eine Anlage zum Herstellen von Mehrschicht-Verbundrohren ist in den Fig. 1 und 2 zunächst in einer schematischen Übersicht dargestellt. Die Anlage weist in Produktionsrichtung 150 gesehen (in den Fig. 1 und 2 von rechts nach links) zunächst einen Spulenständer 10 bzw. Coilständer zur Aufnahme eines Metallbandes, beispielsweise eines Aluminiumbandes, auf. An diesen Spulenständer 10 schließt sich ein Bandspeicher 20 zum Zwischenspeichern von Metallband bei einem Bandwechsel an, dem eine Umformeinrichtung 30 zum Umformen des Metallbandes in einen rohr- bzw. U-förmigen Körper nachgeschaltet ist. Daran schließt sich eine Schweißstation 40 an, deren Aufbau nachfolgend näher erläutert wird und hieran ein Kühlbecken 50 zum Abkühlen des fertigen Mehrschicht-Verbundrohres. Stromabwärts des Kühlbeckens 50 sind bei der dargestellten Anlage eine Mess- und Oberflächenprüfstation 60 zur maßlichen Kontrolle des Rohraußendurchmessers und von Oberflächenfehlern, eine Dichtheits-Druckstation 70 zum Überprüfen der Schweißnaht auf Gasdichtheit und Bedruckung des Rohres, ein Bandabzug 80 zum kontinuierlichen Abziehen des fertigen Rohres aus der Anlage und eine Doppelhaspel 90 zum Aufwickeln des fertigen Rohres vorgesehen.

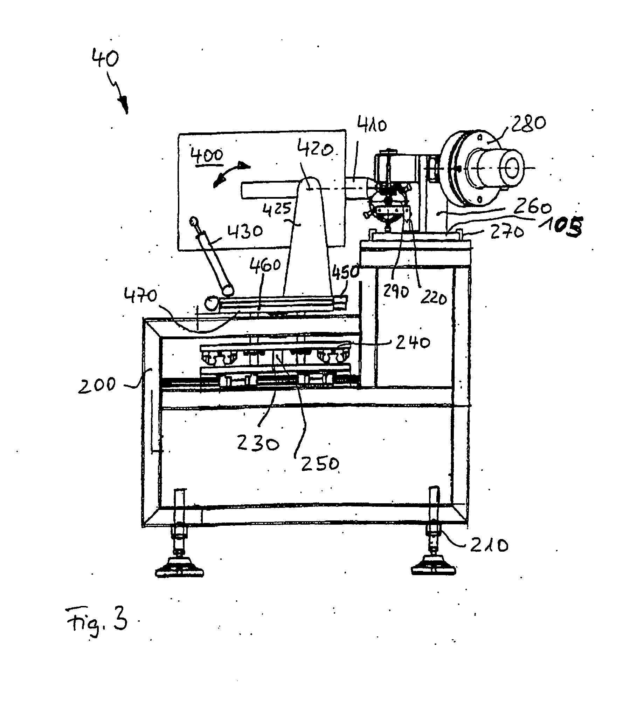

Wesentlich für die erfindungsgemäße Anlage ist der Aufbau und die Ausgestaltung der Schweißstation 40, die in den Fig. 3 ff. im Einzelnen dargestellt ist. In Fig. 1 und 2 ist der Übersichtlichkeit halber nur gezeigt, dass sich auf der Schweißstation 40 eine Schweißeinrichtung 400 befindet, und zwar seitlich neben der Produktionsrichtung 150. Parallel zur Schweißstation 40 und der Produktionsrichtung 150 sind ein erster Extruder 110 zum Extrudieren des Kunststoffinnenrohres und ein diesem zugeordneter dritter Extruder 120 zum Aufbringen eines Innenschicht-Haftvermittlers vorgesehen, welche so auf einer beweglichen Plattform 100 gelagert sind, dass sie längs ihrer Extrusionsachse und in ihrer Höhe verstellbar sind und mittels dieser parallel zur Produktionsrichtung 150. Der Extruder 120 ist quer zur Produktionsrichtung 150 und der erste Extruder 110 in einem Winkel α (Fig. 6) von beispielsweise 45° zur Produktionsrichtung 150 angeordnet.

Stromabwärts der Schweißeinrichtung 400 ist auf der Schweißstation 40 ein dritter Extruder 140 zum Extrudieren des Kunststoff-Außenrohres und ein diesem zugeordneter vierter Extruder 130 zum Aufbringen einer Kunststoff-Außenschicht vorgesehen, beide Extruder 130, 140 sind wiederum in ihrer Längsrichtung und in ihrer Höhe verstellbar angeordnet. Der vierte Extruder 130 ist quer zur Produktionsrichtung 150 und der zweite Extruder 140 ist spiegelbildlich zum ersten Extruder 110 ebenfalls in einem Winkel α (Fig. 6) zur Produktionsrichtung 150 angeordnet.

Der genaue Aufbau der Schweißstation 40 mit den für die Anlage wesentlichen Elementen ist den Fig. 3 bis 6 zu entnehmen.

Die Schweißstation 40 weist zunächst ein Grundgestell 200 auf, das mittels Stellfüßen 210 höhenverstellbar zur ortsfesten Befestigung der Schweißstation 40 auf einer Bodenfläche ausgebildet ist. Die vom Grundgestell 200 getragene Schweißeinrichtung 400 ist mittels einer Längsverstellung 230 quer zur Produktionsrichtung und mittels einer Querverstellung 240 längs der Produktionsrichtung 150 verstellbar sowie mittels einer Höhenverstellung 250 auch in der Höhe verstellbar. Ferner kann die Schweißeinrichtung 400 mit einer Sonotrode 410 um ein Gelenk 420 mittels eines Pneumatikzylinders 430 im Sinne des Doppelpfeiles in Fig. 3 verschwenkt werden.

Die Schweißeinrichtung 400 ist über einen Tragarm 425 an einer Grundplatte 460 angeordnet, welche auf einer Grundplatte 470 einer Verstelleinheit mittels einer Verstelleinrichtung 450 um eine vertikale Achse 440 geschwenkt werden kann. Dabei ist die Grundplatte 470 fest mit der Höhenverstellung 250 verbunden.

Auf dem Grundgestell 200 der Schweißstation 40 ist ferner ein erster Extrusionskopf 260 angeordnet, und zwar auf einer Plattform 105, welche mittels einer Verstelleinrichtung 270 parallel zur Produktionsrichtung 150 verstellt werden kann. Die Verstellung der beiden Plattformen 100 und 105 parallel zur Produktionsrichtung kann synchron erfolgen. Ferner ist an der Plattform 105 ein Halter 220 für ein Schließrollenpaket 290 vorgesehen, das einen Bestandteil der Umformeinrichtung zur endgültigen Umformung des bereits in der Umformeinrichtung 30 rohr- bzw. U-förmig umgeformten Metallbandes in die Rohrform bildet.

Der erste Extrusionskopf 260 weist einen Flansch 280 zum Anschließen des ersten Extruders 110 auf, welcher in Fig. 3 nicht dargestellt ist.

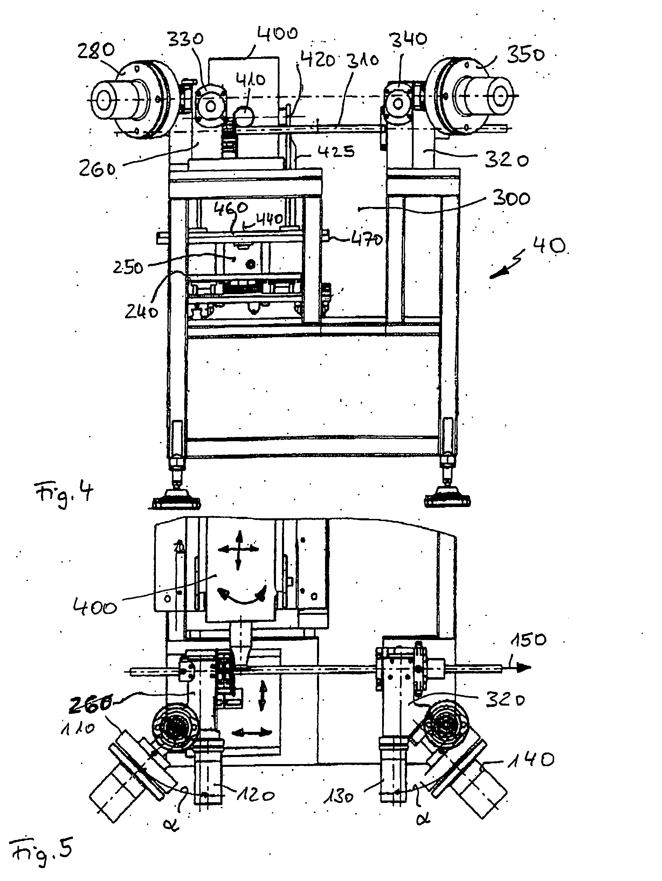

In den Fig. 4 und 5 sind die weiteren an der Schweißstation 40 angeordneten Elemente dargestellt: Während links der verstellbare Extrusionskopf 260 mit dem ersten Extruder 110 und dem zweiten Extruder 120 zu erkennen ist, ist stromabwärts der ortsfeste zweite Extrusionskopf 320 an der Schweißstation 40 angeordnet, welcher einen Flansch 350 zum Anschluss des zweiten Extruders 140 und einen Flansch 340 zum Anschluss des vierten Extruders 140 aufweist. In dieser Darstellung ist auch ein Flansch 330 des ersten Extrusionskopfes 260 für den dritten Extruder 330 zu erkennen.

Zwischen dem ersten Extrusionskopf 260 und dem zweiten Extrusionskopf 320 ist ein Freiraum 300 vorgesehen, der beispielsweise zur Aufnahme von nicht dargestellten Prozessüberwachungseinrichtungen geeignet ist. Durch die Möglichkeit der Veränderung des Abstandes zwischen den beiden Extrusionsköpfen 260, 320 in Produktionsrichtung 150 kann.dieser Freiraum 300 in der Größe variiert werden.

Erkennbar sind somit alle wesentlichen Elemente der Anlage auf der Schweißstation 40 in variabler Weise angeordnet. Der erste Extrusionskopf 260 ist gegenüber dem ortsfesten zweiten Extrusionskopf 320 parallel zur Produktionsrichtung 150 verfahrbar, sämtliche Extruder 110, 120, 130, 140 sind zusätzlich in ihrer Höhe und ihrer Längsrichtung verstellbar ausgebildet. Die Schweißeinrichtung 400 ist gegenüber der Schweißstation 40 in allen drei Raumrichtungen verstellbar, zudem ist sie auch verschwenkbar. Das Schließrollenpaket 290 ist gemeinsam mit dem ersten Extrusionskopf 260 mittels der Plattform 105 verfahrbar. Zusätzlich ist es gegenüber der Plattform 105 mit Hilfe des Halters 220 in alle Freiheitsgrade verstellbar.

## Patentansprüche

1. Anlage zum Herstellen von Mehrschicht-Verbundrohren mit einer Umformeinrichtung (30) zum Umformen eines Metallbandes in einen rohrförmigen Körper, mit einer Schweißstation (40) mit Schweißeinrichtung (400) zum Verschweißen der benachbarten Längsränder des rohrförmigen Körpers sowie mit einer Extrusionseinrichtung, welche einen an die Umformeinrichtung (30) angrenzenden, in Produktionsrichtung (150) gesehen, vor der Schweißeinrichtung (400) angeordneten ersten Extruder (110) zum Anbringen einer Kunststoff-Innenschicht an den rohrförmigen Körper, dem ein dritter Extruder (120) zum Aufbringen eines Innenschicht-Haftvermittlers zugeordnet ist, und einen hinter der Schweißeinrichtung (400) angeordneten zweiten Extruder (140) zum Aufbringen einer Kunststoff-Außenschicht an den rohrförmigen Körper aufweist, dem ein vierter Extruder (130) zum Aufbringen eines Außenschicht-Haftvermittlers zugeordnet ist,
**dadurch gekennzeichnet,**
**dass** die Extrusionseinrichtung einen vor der Schweißeinrichtung (400) angeordneten ersten Extrusionskopf (260), der mit dem ersten Extruder (110) und dem dritten Extruder (120) verbunden ist, und einen hinter der Schweißeinrichtung (400) angeordneten zweiten Extrusionskopf (320) aufweist, der mit dem zweiten Extruder (140) und dem vierten Extruder (130) verbunden ist, wobei der erste Extrusionskopf (260) parallel zur Produktionsrichtung verstellbar ist und der zweite Extrusionskopf (320) ortsfest angeordnet ist oder der erste Extrusionskopf (260) und der zweite Extrusionskopf (320) parallel zur Produktionsrichtung (150) und relativ zueinander verstellbar ausgebildet sind.

2. Anlage nach Anspruch 1
**dadurch gekennzeichnet,**
**dass** der erste und der dritte Extruder (110, 120) und/ oder der zweite und der vierte Extruder (140, 130) in ihrer Höhe und ihrer Längsrichtung verstellbar ausgebildet sind.

3. Anlage nach Anspruch 1 oder 2,
**dadurch gekennzeichnet,**
**dass** beide Extrusionsköpfe (260, 320) auf der ortsfesten Schweißstation (40) angeordnet sind.

4. Anlage nach einem oder mehreren der Ansprüche 1 bis 3,
**dadurch gekennzeichnet,**
**dass** die Schweißeinrichtung (400) gegenüber der Schweißstation (40) in allen drei Raumrichtungen verstellbar ist.

5. Anlage nach einem oder mehreren der Ansprüche 1 bis 4,
**dadurch gekennzeichnet,**
**dass** der verstellbare erste Extrusionskopf (260) an einer gegenüber der Schweißstation (40) in Produktionsrichtung (150) verfahrbaren Plattform (105) angeordnet ist, an welcher zusätzlich ein Schließrollenpaket (290) angeordnet ist.

6. Anlage nach Anspruch 5,
**dadurch gekennzeichnet,**
**dass** das Schließrollenpaket (290) gegenüber der Plattform (105) in allen drei Raumrichtungen verstellbar ausgebildet ist.

7. Anlage nach einem oder mehreren der Ansprüche 3 bis 6,
**dadurch gekennzeichnet,**
**dass** zwischen beiden Extrusionsköpfen (260, 320) ein Freiraum (300) zur Aufnahme von Prozessüberwachungseinrichtungen und der seitlich neben den beiden Extrusionsköpfen (260, 320) angeordneten Schweißeinrichtung (400) vorgesehen ist.

8. Anlage nach einem oder mehreren der Ansprüche 5 bis 7,
**dadurch gekennzeichnet,**
**dass** die auf einer beweglichen Plattform (100) angeordneten Extruder (110, 120) synchron mit der den ersten Extrusionskopf (260) tragenden Plattform (105) verschiebbar sind.

## Claims

1. System for producing multi-layer composite tubes, comprising a forming device (30) for forming a metal strip into a tubular body, a welding station (40) having a welding device (400) for welding the adjacent longitudinal edges of the tubular body, and an extrusion device, which comprises a first extruder (110), which is adjacent to the forming device (30) and arranged upstream of the welding device (400), when viewed in the production direction (150), for applying a plastics inner layer to the tubular body, to which a third extruder (120) is assigned for applying an inner layer bonding agent, and a second extruder (140) which is arranged downstream of the welding device (400) for applying a plastics outer layer, to which a fourth extruder (130) is assigned for applying an outer layer bonding agent,
**characterised in that** the extrusion device comprises a first extrusion head (260), which is connected to the first extruder (110) and the third extruder (120) and arranged upstream of the welding device (400), and a second extrusion head (320), which is connected to the second extruder (140) and the fourth extruder (130) and arranged downstream of the welding device (400), the first extrusion head (260) being adjustable parallel to the production direction and the second extrusion head (320) being arranged so as to be fixed, or the first extrusion head (260) and the second extrusion head (320) being formed so as to be parallel to the production direction (150) and so as to be adjustable relative to one another.

2. System according to claim 1, **characterised in that** the first and the third extruder (110, 120) and/or the second and the fourth extruder (140, 130) are formed so as to be adjustable in height and in the longitudinal direction thereof.

3. System according to either claim 1 or claim 2, **characterised in that** both extrusion heads (260, 320) are arranged on the fixed welding station (40).

4. System according to one or more of claims 1 to 3, **characterised in that** the welding device (400) is adjustable in all three directions in space relative to the welding station (40).

5. System according to one or more of claims 1 to 4, **characterised in that** the adjustable first extrusion head (260) is arranged on a platform (105) which is movable relative to the welding station (40) in the production direction (15) and on which a set of closing rollers (290) is additionally arranged.

6. System according to claim 5, **characterised in that** the set of closing rollers (290) is formed so as to be adjustable in all three directions in space relative to the platform (105).

7. System according to one or more of claims 3 to 6, **characterised in that** a clearance (300) is provided between both extrusion heads (260, 320) for receiving process monitoring devices and the welding device (400), which is arranged laterally adjacent to the two extrusion heads (260, 320).

8. System according to one or more of claims 5 to 7, **characterised in that** the extruder (110, 120) arranged on a movable platform (100) can be moved synchronously with the platform (105) supporting the first extrusion head (260).

## Revendications

1. Installation pour la fabrication de tubes composites à couches multiples, comprenant un dispositif de façonnage (30) pour convertir une bande métallique en un corps de forme tubulaire, un poste de soudage (40) avec un dispositif de soudage (400) pour souder les bords longitudinaux voisins du corps de forme tubulaire ainsi qu'un dispositif d'extrusion, qui présente une première extrudeuse (110) adjacente au dispositif de façonnage (30) et aménagée, lorsque l'on observe dans le sens de la production, devant le dispositif de soudage (400) pour appliquer une couche interne de matière plastique sur le corps de forme tubulaire, auquel est affectée une troisième extrudeuse (120) pour appliquer un agent adhésif de couche interne et présente une deuxième extrudeuse (140) aménagée derrière le dispositif de soudage (400) pour appliquer une couche externe de matière plastique au corps de forme tubulaire, auquel est affectée une quatrième extrudeuse (130) pour appliquer un agent adhésif de couche externe,
**caractérisée en ce que** :
le dispositif d'extrusion présente une première tête d'extrusion (260) aménagée devant le dispositif de soudage (400), laquelle tête est raccordée à la première extrudeuse (110) et à la troisième extrudeuse (120), et une deuxième tête d'extrusion (320) aménagée derrière le dispositif de soudage (400), cette dernière tête étant raccordée à la deuxième extrudeuse (140) et à la quatrième extrudeuse (130), dans laquelle la première tête d'extrusion (260) peut être déplacée parallèlement à la direction de production et la deuxième tête d'extrusion (320) est fixe ou la première tête d'extrusion (260) et la deuxième tête d'extrusion (320) sont aménagées pour pouvoir se déplacer parallèlement à la direction de production (150) et l'une par rapport à l'autre.

2. Installation selon la revendication 1,
**caractérisée en ce que** :
la première et la troisième extrudeuse (110, 120) ou la deuxième et la quatrième extrudeuse (140, 130) sont aménagées pour pouvoir se déplacer sur leur hauteur et dans leur direction longitudinale.

3. Installation selon la revendication 1 ou la revendication 2,
**caractérisée en ce que** :
les deux têtes d'extrusion (260, 320) sont aménagées sur le poste de soudage fixe (40).

4. Installation selon une ou plusieurs des revendications 1 à 3,
**caractérisée en ce que** :
le dispositif de soudage (400) est aménagé pour pouvoir se déplacer vis-à-vis du poste de soudage (40) dans la totalité des trois directions spatiales.

5. Installation selon une ou plusieurs des revendications 1 à 4,
**caractérisée en ce que** :
la première tête d'extrusion mobile (260) est aménagée sur une plateforme (105) déplaçable par rapport au poste de soudage (40) dans le sens de production (150).

6. Installation selon la revendication 5,
**caractérisée en ce que** :
le paquet de rouleaux de fermeture (290) est aménagé de manière à pouvoir se déplacer par rapport à la plateforme (105) dans la totalité des trois directions spatiales.

7. Installation selon une ou plusieurs des revendications 3 à 6,
**caractérisée en ce que** :
il est prévu entre les deux têtes d'extrusion (260, 320) un espace libre (300) pour recevoir des dispositifs de contrôle de processus et le dispositif de soudage (400) aménagé latéralement à côté des deux têtes d'extrusion (260, 320).

8. Installation selon une ou plusieurs des revendications 5 à 7,
**caractérisée en ce que** :
les extrudeuses (110, 120) aménagées sur une plateforme mobile (100) peuvent se déplacer en synchronisme avec la plateforme (105) portant la première tête d'extrusion (260).
